Europäisches Patentamt

(19) European Patent Office

Office européen des brevets

(11) Publication number: **0 238 262**
**B1**

(12) **EUROPEAN PATENT SPECIFICATION**

(45) Date of publication of the patent specification:
23.05.90

(51) Int. Cl.⁵: **B60S 1/38**

(21) Application number: **87302146.3**

(22) Date of filing: **12.03.87**

(54) **Dissymmetrical wiper blade.**

(30) Priority: **18.03.86 FR 8603830**

(43) Date of publication of application:
**23.09.87 Bulletin 87/39**

(45) Publication of the grant of the patent:
**23.05.90 Bulletin 90/21**

(84) Designated Contracting States:
**BE DE ES GB IT**

(56) References cited:
**DE-U- 8 613 824**
**FR-A- 1 124 116**
**FR-A- 2 450 182**

(73) Proprietor: **CHAMPION SPARK PLUG EUROPE S.A.,
Avenue Leopold III 2a, B-7120 Binche(BE)**

(72) Inventor: **Beneteau, Christian, Rue du 131e Regiment
d'Infanterie 61, F-54730 Gorcy(FR)**

(74) Representative: **Crawford, Andrew Birkby et al, A.A.
THORNTON & CO. Northumberland House 303-306 High
Holborn, London WC1V 7LE(GB)**

## Description

The present invention relates to a wiper blade for motor vehicles or the like comprising a wiping element reinforced by a longitudinal pressure distributing device which is pivotally attached at its two extremities to the single bridge which constitutes the superstructure of the wiper blade.

Wiper blades of the thus defined type are known in prior art and in particular such wiper blades are disclosed in French patents 1 033 521 and 1 060 421. The first of said French patents shows a wiper blade comprising a longitudinal pressure distributing device pivotally connected to a single bridge made in one piece. The second of the mentioned French patents shows a wiper blade comprising a longitudinal pressure distributing device pivotally connected to a single bridge made of two equally long elements.

One of the disadvantages of the wiper blades disclosed in the two French patents is the fact that they are symmetrical with respect to the medium transverse plane of their single bridge. Indeed the symmetry with respect to said medium transverse place implies a pressure distribution which is far from being perfect on a curved windshield.

Another symmetrical arrangement is shown in FR-A 1 124 116. In this arrangement the pressure distributing device has a transverse section which diminishes from its central area to the two extremities of the wiper blade, whereby to provide an even pressure distribution along the blade between the pivotal connections of the bridge. Again this arrangement suffers from disadvantages in use on a curved windshield because, as will be explained below, the curvature of the surface contacting the wiper element varies as the wiper moves, and therefore the pressure distribution is not optimum for the full travel of the wiper.

On a curved windshield the curvature to which the wiping element has to adapt during the oscillating movement of the wiper blade's driving arm (wiper arm) is different on the side of the free extremity of the wiper arm than on the side of the wiper arm's driving shaft. The curvature of the wiping element varies all along its length as a function of the oscillating movement of the wiper arm on the windshield and, for the wiper blade on the driver's side, it reaches its maximum value on the side of the free extremity of the wiper arm when said wiper arm reaches its extreme position with respect to its rest position.

When designing a wiper blade of the above defined type for a curved windshield this should be taken into consideration, i.e. the wiper arm should be dissymmetrical with respect to its medium transverse plane and it should be designed in such a way that the wiping element is capable of adapting itself the best possible to the curved windshield, in particular on the side of the free extremity of the wiper arm.

A dissymmetrical wiper blade assembly is shown in FR 2 450 182 in which a wiper element of uniform cross section is supported on a harness one portion of which is elastically deformable and another portion of which has a yoke pivotally connected thereto. The yoke and deformable portion each have claws for gripping the wiper element.

The object of the invention is to provide a wiper blade of which the wiping element adapts itself the best possible to the configuration of a curved windshield and this in all positions of the wiper arm. For this purpose the wiper blade according to the invention is substantially characterised by the fact that the bridge is made of two elongate branches of different lengths, linked together at one of their extremities by a pivot connection, and that the transverse section of the pressure distributing device diminishes differently on each side of the central area of the wiper blade.

Embodiments of the invention will now be described by way of example only and with reference to the accompanying drawings in which:

Fig. 1 is an elevational view of a wiper blade according to the invention;

Fig. 2 is a top view of the wiper blade of Fig. 1;

Fig. 3a, 3b, 3c, 3d and 3e are respectively sectional views according to the lines IIIa-IIIa, IIIb-IIIb, IIIc-IIIc, IIId-IIId and IIIe-IIIe of the wiper blade of Fig.1 ;

Fig.4 is a sectional view similar to the one of Fig. 3c showing a variant of certain elements of the wiper blade according to the invention ; and

Fig.5 and 6 are sectional views showing two variants of one of the elements of the wiper blade according to the invention.

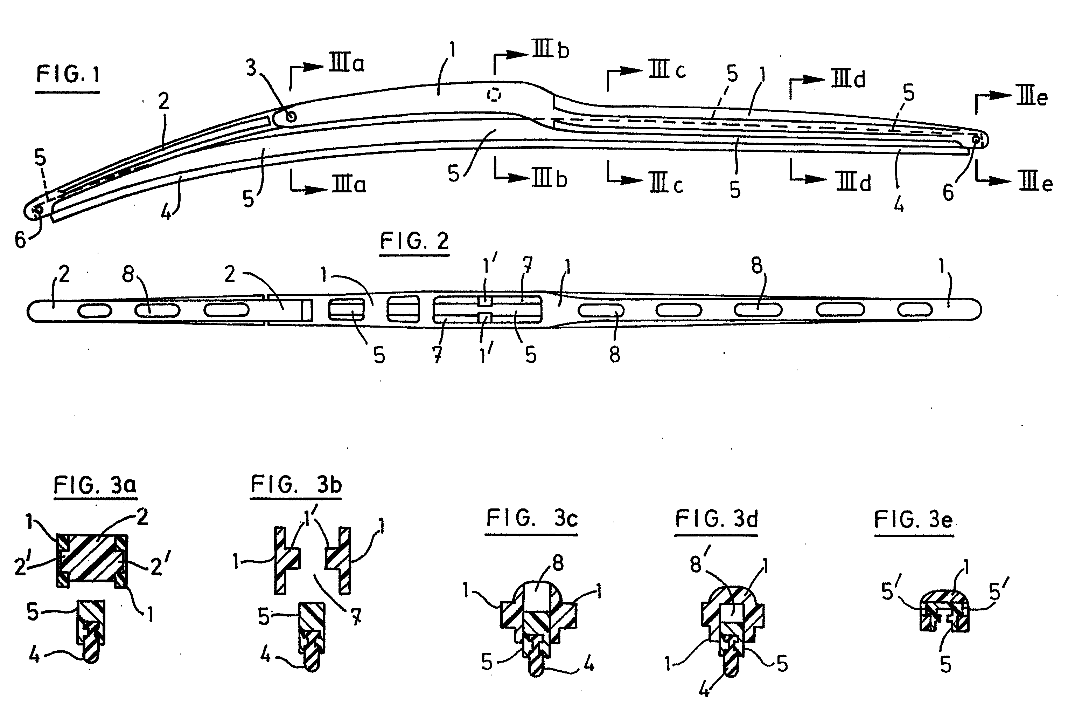

Fig.1 and Fig.2 show that the wiper blade according to the invention essentially comprises the following elements : a single bridge comprising two elongate branches 1,2 linked together by means of the pivot connection 3 and a wiping element 4 reinforced by the longitudinal pressure distributing device 5 which is attached at its two extremities to the single bridge 1,2 by means of the pivot connections 6.

In the upper central portion of the single bridge 1,2 the branch 1 of said bridge 1,2 is provided with a substantially rectangular opening 7 wherein means 1' are provided for pivotally attaching thereto the wiper arm (not shown) of the wiper blade according to the invention. In order to make the two branches 1,2 of the single bridge lighter, said branches are provided with a series of openings 8.

According to Fig. 3a and Fig. 3e the pivot connections 3 and 6 are realized in the same manner, i.e.:

a) concerning the pivot connection 3: the branch 2 of the single bridge is provided with two lateral pins 2' which are capable of rotating in corresponding circular openings provided in the lateral walls of the branch 1 of the single bridge of the wiper blade, and

b) concerning the pivot connections 6: each extremity of the longitudinal pressure distributing device 5 is provided with two lateral pins 5' which are capable of rotating in corresponding circular openings provided respectively in the lateral walls of the branch 1 and of the branch 2 of the single bridge of the wiper blade.

Fig.1, 2, 3a, 3b, 3c, 3d and 3e furthermore show that:
-the transverse section of the branches 1,2 of the single bridge has substantially the form of an inverted U,
-the transverse section of the branches 1,2 of the single bridge diminishes from the central area to the two extremities of the wiper blade,
-the height of the longitudinal pressure distributing device 5 diminishes from the central area to the two extremities of the wiper blade,
-the two branches 1,2 of the single bridge each comprise a longitudinal groove 8' (Fig. 3d) in their bottom portion over at least a portion of their length,
-the branch 1 of the single bridge is provided with a longitudinal groove 8' in its bottom portion over most of its length, and
-said longitudinal grooves 8' of the two branches 1,2 of the single bridge extend from the two extremities of the single bridge towards the central portion of the wiper blade.

It is to be noted that the transverse section of the longitudinal pressure distributing device 5 may diminish differently on each side of the central area of the wiper blade as a function of the configuration of the windshield.

Fig. 3c and Fig. 3d show that the longitudinal pressure distributing device 5 may project into the longitudinal grooves 8' respectively provided in the bottom portion of the two branches 1,2 of the single bridge. To this effect the longitudinal grooves 8' have a width which is slightly superior to the width of the upper portion of the longitudinal pressure distributing device 5.

The wiping element of the thus described dissymmetrical wiper blade adapts itself better to the configuration of a curved windshield than the wiper blades which are symmetrical with respect to their central area. Indeed, because of the shorter branch 2 of the single bridge 1,2 and because of the pivot connection 3 the longitudinal pressure distributing device 5 and consequently the wiping element 4 can incurve itself easier towards the windshield in the area where said windshield is curved most.

As already mentioned above the transverse section of the longitudinal pressure distributing device 5 diminishes on each side of the central area of the wiper blade. Said device 5 thus has a more important flexibility at its two extremities than in its central area. The consequence of this feature is that its adaptability to the curvature of the windshield and thus the adaptability of the wiping element 4, is reinforced at it its two extremities.

Since the curvature of the windshield is most important on the side of the free extremity of the wiper arm, i.e. on the side of the shorter branch 2 of the single bridge 1,2, the transverse section of the longitudinal pressure distributing device 5 principally diminishes more rapidly on said same side than on the opposite side of the wiper blade, i.e. on the side of the longer branch 1 of the single bridge 1,2. This however is not necessarily indispensable because the wiper blade according to the invention may very well work without any inconvenience on many windshields, even if it is provided with a longitudinal pressure distributing device which is symmetrical with respect to its central area.

When the wiper blade is working the upper portion of the pressure distributing device 5 projects into the grooves 8' (Fig.3d) provided in the lower portion of the two branches 1,2 of the single bridge. A first advantage of this feature is that the pressure distributing device 5, and consequently the wiping element 4, is laterally guided over most of its length. A second advantage is that the total height of the wiper blade with respect to the windshield is very small. This is important when the vehicle moves at a relatively high speed since the air which is flowing along the windshield has only a small hold on the wiper blade. The wiping defects at high speed are thus at least partially avoided.

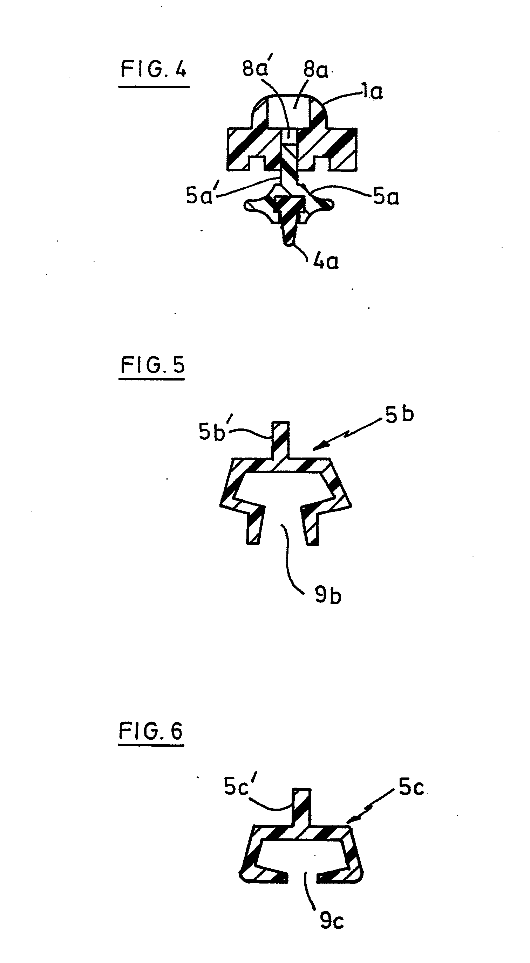

In Fig. 4 the form of the transverse section of the branch 1a of the single bridge, of the pressure distributing device 5a and of the wiping element 4a have been somewhat modified. The essential difference, as compared to the corresponding Fig. 3c, is the fact that the pressure distributing device 5a is provided at its top portion with a longtitudinal rib 5a' of which the width is slightly smaller than the width of the longitudinal groove 8a' provided in the bottom portion of said branch 1a of the single bridge.

Fig. 4 is of course representative for the two branches of the single bridge and, just as in Fig. 2 and Fig. 3c said two branches are provided with openings 8a and the height of the rib 5a' of the longitudinal pressure distributing device 5a diminishes from the central area to the two extremities of the wiper blade.

The two sectional views of Fig. 5 and Fig. 6 show two other possible forms of the pressure distributing device 5b, 5c which each comprise an upper rib 5b', 5c' capable of projecting into the longitudinal groove provided in the botton portion of the two branches of the single bridge of the wiper blade. In both cases the wiping element is inserted into the longitudinal groove 9b, 9c of the pressure distributing device 5b, 5c.

A new wiper blade has thus been described. It is however evident that modifications can be made without departing from the scope of the invention such as defined in the appended claims. In this respect it is to be noted that the transverse section of the longitudinal pressure distributing device, and of the wiping element, can have various forms inasmuch as the upper portion of the pressure distributing device is capable of projecting into the longitudinal groove provided in the bottom portion of the two branches of the single bridge of the wiper blade.

## Claims

1. A wiper blade for motor vehicles comprising a wiping element (4) reinforced by a longitudinal pressure distributing device (5) having a transverse section which diminishes from the central area to the two extremities of the wiper blade and which is pivotally attached (6) at its two extremities to a bridge (1, 2) which constitutes the superstructure of the wiper blade, characterised in that said bridge consists of two elongate elements (1, 2) of different lengths linked together at one of their extremities by a pivot connection (3) and that the transverse section of the pressure distributing device (5) diminishes differently on each side of the central area of the wiper blade.

2. A wiper blade according to claim 1, characterised in that only the height of the pressure distributing device (5) diminishes from the central area to the two extremities of the wiper blade.

3. A wiper blade according to claim 1 or 2, characterised in that the two elongate elements (1, 2) of the bridge each comprise a longitudinal groove (8′, 8a′) in their bottom portion and that the pressure distributing device (5a, 5b, 5c) is provided at its upper surface with a longitudinal rib (5a, 5b, 5c) having a width slightly smaller than the width of said longitudinal grooves (8′, 8a′) in the elongate elements (1, 2) of the bridge.

4. A wiper blade according to claim 3, characterised in that the height of said longitudinal rib (5a′, 5b′, 5c′) of the pressure distributing device (5a, 5b, 5c) diminishes from the central area to the two extremities of the wiper blade.

## Patentansprüche

1. Wischerblatt für Kraftfahrzeuge, das ein Wischelement (4) aufweist, das durch eine Längsdruckverteilungseinrichtung (5) verstärkt ist, die einen Querschnitt hat, der von dem Mittelbereich zu den beiden Enden des Wischerblatts abnimmt, und die schwenkbar (bei 6) an ihren beiden Enden an einer Brücke (1, 2) angebracht ist, die den Überbau des Wischerblatts bildet, dadurch gekennzeichnet, daß die Brücke zwei längliche Teile (1, 2) mit unterschiedlichen Längen aufweist, die an einem ihrer Enden über eine Schwenkverbindung (3) miteinander verbunden sind und daß der Querschnitt der Druckverteilungseinrichtung (5) auf jeder Seite des Mittelbereichs des Wischerblatts unterschiedlich abnimmt.

2. Wischerblatt nach Anspruch 1, dadurch gekennzeichnet, daß nur die Höhe der Druckverteilungseinrichtung (5) von dem Mittelbereich zu den beiden Enden des Wischerblatts abnimmt.

3. Wischerblatt nach Anspruch 1 oder 2, dadurch gekennzeichnet, daß die beiden länglichen Elemente (1, 2) der Brücke jeweils eine Längsausnehmung (8′, 8a′) in ihrem Bodenteil aufweisen und daß die Druckverteilungseinrichtung (5a, 5b, 5c) an ihrer oberen Fläche mit einer Längsrippe (5a, 5b, 5c) versehen ist, die eine Breite hat, die geringfügig kleiner als die Breite der Längsausnehmungen (8′, 8a′) in den stabförmigen Elementen (1, 2) der Brücke ist.

4. Wischerblatt nach Anspruch 3, dadurch gekennzeichnet, daß die Höhe der Längsrippe (5a′, 5b′, 5c′) der Druckverteilungseinrichtung (5a, 5b, 5c) von dem Mittelbereich zu den beiden Enden des Wischerblattes abnimmt.

## Revendications

1. Essuie-glace pour véhicules à moteur, comprenant un élément de balayage (4) renforcé par un dispositif (5) distributeur de pression, longitudinal, ayant une section transversale qui diminue de la région centrale aux deux extrémités de l'essuie-glace et qui est attaché à pivotement (6), à ses deux extrémités, à un pont (1, 2) qui constitue la superstructure de l'essuie-glace, caractérisé en ce que le pont consiste en deux éléments allongés (1, 2) de longueurs différentes, articulés ensemble à une de leurs extrémités par une liaison à pivot (3) et en ce que la section transversale du dispositif (5) distributeur de pression diminue de façon différente de part et d'autre de la région centrale de l'essuie-glace.

2. Essuie-glace suivant la revendication 1, caractérisé en ce que seule la hauteur du dispositif (5) distributeur de pression diminue de la région centrale aux deux extrémités de l'essuie-glace.

3. Essuie-glacee suivant la revendication 1 ou 2, caractérisé en ce que les deux éléments allongés (1, 2) du pont comprennent chacun une rainure longitudinale (8′, 8a′) dans leur partie du bas, et en ce que le dispositif (5a, 5b, 5c) distributeur de pression est pourvu à sa surface supérieure d'une nervure longitudinale (5a, 5b, 5c) ayant une largeur légèrement inférieure à la largeur des rainures longitudinales (88′, 8a′) dans leurs éléments (1, 2) en forme de tiges du pont.

4. Essuie-glace suivant la revendication 3, caractérisé en ce que la hauteur de la nervure longitudinale (5a′, 5b′, 5c′) du dispositif (5a, 5b, 5c) distributeur de pression diminue de la région centrale aux deux extrémités de l'essuie-glace.

FIG.1

FIG. 2

FIG. 3a    FIG. 3b

FIG. 3c    FIG. 3d    FIG. 3e

EP 0 238 262 B1

FIG. 4

8a'  8a  1a

5a'  5a

4a

FIG. 5

5b'  5b

9b

FIG. 6

5c'  5c

9c